# EUROPEAN PATENT SPECIFICATION

(11) **EP 3 390 994 B1**
(45) Date of publication and mention of the grant of the patent: **10.03.2021**
(21) Application number: 16828816.5
(22) Date of filing: 12.12.2016
(51) Int. Cl.: G01K 1/02, G01K 3/14

(54) **DETERMINING HOT CARGO LOAD CONDITION IN A REFRIGERATED CONTAINER**
BESTIMMUNG DES ZUSTANDS EINER HEISSFRACHTLADUNG IN EINEM GEKÜHLTEN CONTAINER
DÉTECTION D'ÉTAT DE CHARGEMENT DE FRET CHAUD DANS UN CONTENEUR FRIGORIFIQUE

(30) Priority: 18.12.2015 US 201562269253 P
(43) Date of publication of application: 24.10.2018
(73) Proprietor: Carrier Corporation, Farmington, Connecticut 06032 (US)
(72) Inventor: CHEN, Yu H., East Syracuse New York 13057 (US); RUSIGNUOLO, Giorgio, East Syracuse New York 13057 (US); BEASLEY, Marc, Beverly Massachusetts 01915 (US); DIMAGGIO, Luke, Athens Georgia 30601 (US); KUMAR, Kartik, 3047 BL Rotterdam (NL)
(74) Representative: Schmitt-Nilson Schraud Waibel Wohlfrom Patentanwälte Partnerschaft mbB
(86) International application number: PCT/US2016/066057
(87) International publication number: WO 2017/106058

(56) References cited:
- JP-A- H11 257 828
- US-A1- 2013 289 927

## Description

### TECHNICAL FIELD

The subject matter disclosed herein relates to determining cargo conditions within a refrigerated container, and to a system and a method for determining a hot cargo load condition in a refrigerated container.

Typically, cold chain distribution systems are used to transport and distribute temperature sensitive and perishable goods. For example, products such as food and pharmaceuticals may be susceptible to temperature, humidity, contaminants, and other environmental factors. Advantageously, cold chain systems allow perishable and environmentally sensitive goods to be effectively transported and distributed without damage or other undesirable effects.

Cargo transported by cold chain distribution systems is received from many sources. Suppliers of cargo may fail to pre-cool the cargo before shipment, resulting in a hot cargo load. A system and method that can determine a hot cargo load condition in a refrigerated container is desired.

JP H11 257828 A shows a container having fans equipped with mechanisms to shake necks up and down and right and left are arranged. A conserver controls a system to detect and specify a temperature and place of food with plural temperature sensors within a storage room, when a user puts food warmer than a prescribed temperature anew into where he cools foods to a prescribed temperature and conserves it on the partition wall of a storage room, and to send signals to the fans and operate them and apply a required quantity of cooling wind to the food and return it into stationary state when it comes to a prescribed temperature.

US 2013/289927 A1 shows a computer-based method including collecting a sequence of measurements related to a controllable environmental parameter in a monitored space over time, deriving a master curve based on the sequence of collected measurements to characterize normal periodic variations in the controllable environmental parameter over time, collecting one or more subsequent measurements that represent the controllable environmental parameter of the monitored space, and evaluating a likelihood that the controllable environmental parameter will, at some future point in time, exceed an acceptable level by comparing a curve associated with one or more of the subsequent measurements to the master curve.

### BRIEF SUMMARY

According to the invention, a method to determine a hot cargo load condition of a cargo load in a refrigerated container includes providing a plurality of sensors disposed within the refrigerated container, operating the refrigeration unit with a set of desired operational parameters corresponding to the cargo load, analyzing a plurality of sensor readings corresponding to the plurality of sensors via a processor, creating a temperature distribution profile of the refrigerated container corresponding to the plurality of sensor readings via the processor, retrieving a historical temperature distribution profile corresponding to the cargo load via a historical database, comparing the temperature distribution profile to the historical temperature distribution profile via the processor, and identifying the hot cargo load condition in response to the temperature distribution profile exceeding the historical temperature distribution profile via the processor, wherein the historical temperature distribution profile is a temperature distribution profile corresponding to a similar cargo load which was transported in a similar refrigerated container under similar conditions.

In addition embodiments could include retrieving at least one historical operational parameter corresponding to the cargo load.

Further embodiments could include that at least one sensor of the plurality of sensors is an infrared temperature sensor.

Further embodiments could include that at least one sensor of the plurality of sensors is a surface temperature sensor.

Further embodiments could include that the temperature distribution profile is a three dimensional temperature distribution profile.

Further embodiments could include sending an alert via a remote monitoring interface in response to the hot cargo load condition.

Further embodiments could include sending an alert via a local monitoring interface in response to the hot cargo load condition.

According to the invention, a system to determine a hot cargo load condition of a cargo load in a refrigerated container includes a plurality of sensors disposed within the refrigerated container to provide a plurality of sensor readings, a refrigeration unit associated with the refrigerated container, the refrigeration unit to operate with a set of desired operational parameters corresponding to the cargo load, a historical database including a historical temperature distribution profile corresponding to the cargo load, and
a processor to analyze the plurality of sensor readings and create a temperature distribution profile of the refrigerated container corresponding to the plurality of sensor readings, to compare the temperature distribution profile to the historical temperature distribution profile to identify the hot cargo load condition in response to the temperature distribution profile exceeding the historical temperature distribution profile, wherein the historical temperature distribution profile is a temperature distribution profile corresponding to a similar cargo load which was transported in a similar refrigerated container under similar conditions.

Further embodiments could include that the historical database further includes at least one historical operational parameter corresponding to the cargo load.

Further embodiments could include that at least one sensor of the plurality of sensors is an infrared temperature sensor.

Further embodiments could include that at least one sensor of the plurality of sensors is a surface temperature sensor.

Further embodiments could include that the temperature distribution profile is a three dimensional temperature distribution profile.

Further embodiments could include a remote monitoring interface to send an alert in response to the hot cargo load condition.

Further embodiments could include a local monitoring interface to send an alert in response to the hot cargo load condition.

Technical function of the embodiments described above includes comparing the temperature distribution profile to the historical temperature distribution profile via the processor, and identifying the hot cargo load condition in response to the temperature distribution profile exceeding the historical temperature distribution profile via the processor.

Other aspects, features, and techniques of the embodiments will become more apparent from the following description taken in conjunction with the drawings.

### BRIEF DESCRIPTION OF THE SEVERAL VIEWS OF THE DRAWINGS

The subject matter is particularly pointed out and distinctly claimed in the claims at the conclusion of the specification. The foregoing and other features, and advantages of the embodiments are apparent from the following detailed description taken in conjunction with the accompanying drawings in which like elements are numbered alike in the several FIGURES:
FIG. 1 illustrates a schematic view of a hot load condition monitoring system;
FIG. 2 is a representative view of a temperature distribution of a refrigerated container with a hot cargo load;
FIG. 3 is a representative view of a temperature distribution of a refrigerated container with pre-cooled cargo; and
FIG. 4 is a flow diagram of a method of determining a hot cargo load condition in a refrigerated container.

### DETAILED DESCRIPTION

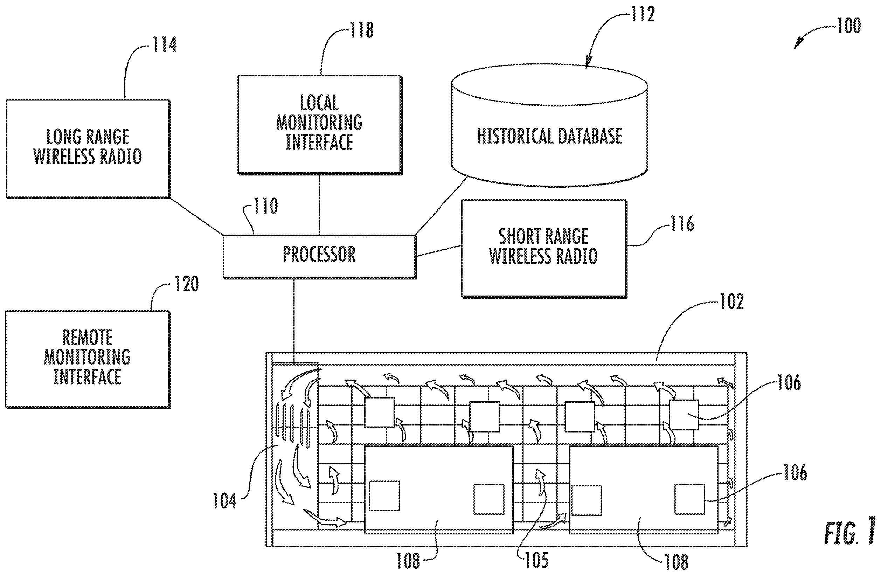

Referring now to the drawings, FIG. 1 illustrates a schematic view of a hot load condition monitoring system 100. In the illustrated embodiment, the hot load condition monitoring system 100 includes a refrigerated container 102, a refrigeration unit 104, sensors 106, cargo load 108, a processor 110 and a historical database 112. In the illustrated embodiment, the hot load condition monitoring system 100 can provide an alert or alarm if a cargo load 108 is introduced into the refrigerated container 102 without being pre-cooled. Advantageously, the use of the hot load condition monitoring system 100 can reduce damage caused by a hot cargo load 108 to the hot cargo load 108, surrounding cargo loads 108, and assist in identifying liability for cargo damage if perishable goods or food are affected by the hot cargo load 108.

In the illustrated embodiment, the cargo load 108 is transported or stored within the refrigerated container 102, wherein the refrigeration unit 104 can control the temperature of the cargo load 108. In the illustrated embodiment, the cargo load 108 includes any suitable product. In certain embodiments, the cargo load 108 includes perishable products such as meat, fruit, vegetables, drugs, blood, etc. that may be transported via a cold chain system. In the illustrated embodiment, the cargo load 108 is a temperature sensitive cargo, including, but not limited to food, drugs, blood, and other temperature sensitive materials.

In the illustrated embodiment, the cargo load 108 and elements within the cargo load 108 have a thermal mass that can act as a thermal accumulator. In certain embodiments, the thermal accumulation properties of the cargo load 108 allow the cargo load 108 to maintain a cargo temperature as well as affect a surrounding air temperature. In certain embodiments, the temperature of the cargo load 108 can affect the temperature of the surrounding cargo load 108.

In certain applications cargo suppliers are often required to pre-cool the cargo load 108 before shipment via the refrigerated container 102. In certain embodiments, if the cargo load 108 is loaded hot or not pre-cooled, the hot cargo load 108 may retain heat which may prevent the cargo load 108 from reaching a desired temperature range while being transported within refrigerated container 102. In certain embodiments, if the products within the cargo load 108 are perishable, they may be damaged or destroyed by such temperature excursions. In certain embodiments, the temperature of the hot cargo load 108 can affect other cargo loads 108 within the refrigerated container 102. Accordingly, hot cargo loads 108 can damage their own cargo loads 108 and other cargo loads 108 within the same refrigerated container 104. In the illustrated embodiment, hot cargo loads 108 affect the temperature distribution within the refrigerated container 102.

In the illustrated embodiment, the cargo load 108 is transported and stored in the refrigerated container 102. In the illustrated embodiment, the refrigerated container 102 is an insulated container to provide thermal isolation and to maintain a desired climate within the volume of the refrigerated container 102. Therefore, in the illustrated embodiment, environmental parameters such as temperature, humidity, etc. are generally controlled within the volume of the refrigerated container 102. In certain embodiments the refrigerated container 102 can be pulled by a tractor. It is understood that embodiments described herein may be applied to shipping containers that are shipped by rail, sea, or any other suitable container, without use of a tractor. In the illustrated embodiment the refrigerated container 102 can include at least one door to allow access to volume within.

In the illustrated embodiment, the refrigeration unit 104 provides refrigerated, dehumidified, or otherwise climate controlled air to the volume of the refrigerated container 102. In the illustrated embodiment, climate controlled airflow 105 is utilized to control the temperature profile of the refrigerated container 102 and consequently the cargo load 108. In the illustrated embodiment, the refrigeration unit 104 includes an evaporator disposed within volume of refrigerated container 102. In the illustrated embodiment, the temperature response and distribution profile can be accurately predicted and modeled utilizing the processor 110 and the sensors 106.

In the illustrated embodiment, the sensors 106 can be distributed throughout the volume of the refrigerated container 102. Further, in certain embodiments, the sensors 106 can be affixed to the cargo load 108 or any other suitable location. In certain embodiments, the sensors 106 can provide air temperature values. In certain embodiments, the sensors 106 are evenly distributed throughout the refrigerated container 102 to provide a representative temperature distribution profile within the refrigerated container 102. In certain embodiments, the sensors 106 include surface temperature sensors. In other embodiments, the sensors 106 are infrared temperature sensors.

In the illustrated embodiment, the processor 110 can analyze values provided by the sensors 106 to determine if a hot load condition exists for the cargo load 108 within the refrigerated container 102. In the illustrated embodiment, the processor 110 is associated with a historical database 112, a short range wireless radio 116, a local monitoring interface 118, a long range wireless radio 114 and a remote monitoring interface 120. In the illustrated embodiment, the processor 110 can utilize historical data provided by the historical database 112 and compare the data to the temperature distribution within the refrigerated container 102 to determine if a hot load condition exists with respect to the specific cargo load 108 within the refrigerated container 102. Advantageously, the processor 110 allows for an operator to identify and avoid hot load conditions, mitigating shipping claims for damage due to hot cargo loads 108.

In the illustrated embodiment, the processor 110 can either identify or be provided with identifying information regarding the cargo load 108 within the refrigerated container 102. In the illustrated embodiment, a historical database 112 can store historical records corresponding to cargo loads 108. In the illustrated embodiment, the records contain information about historical operating parameters utilized for a specific cargo load 108. In the illustrated embodiment, the historical database 112 can further store the historical temperature profiles that describe the historical performance of the refrigeration system with respect to the historical operating parameters. In the illustrated embodiment, operating parameters can include refrigeration unit 104 set points, desired temperature range, humidity range, etc. In other embodiments, an operator can input desired operating parameters to the processor 110 via the local monitoring interface 118 or the remote monitoring interface 120.

In the illustrated embodiment, the processor 110 can receive sensor 106 readings from the refrigerated container 102 via a short range wireless radio 116. In the illustrated embodiment, the short range wireless radio 116 allows for communication between the sensors 106 and the processor 110 by utilizing local radio signals, such as Wi-Fi, Bluetooth, near field communication, etc.

In the illustrated embodiment, the sensor 106 readings are analyzed by the processor 110. In the illustrated embodiment, the sensors 106 are disposed throughout the refrigerated container 102, allowing the processor 110 to utilize interpolation or other approximation techniques to determine a temperature distribution within the refrigerated container 102. For example, the processor 110 may utilize known locations of the sensors 106 and approximate temperatures between sensor 106 locations. In certain embodiments, the processor 110 may utilize the sensor 106 values and locations to approximate a two dimensional profile of the temperature distribution within the refrigerated container 102. In other embodiments, three-dimensional approximation may be utilized to approximate a three dimensional profile of the temperature distribution within the refrigerated container 102. In certain embodiments, the temperature distribution profile can be created after a predetermined period of time to reach steady state conditions.

In the illustrated embodiment, the processor 110 can retrieve a historical temperature distribution from the historical database 112. In the illustrated embodiment, the historical temperature distribution is a temperature distribution corresponding to a similar cargo load 108 that was transported in a similar refrigerated container 102 under similar conditions. In certain embodiments, the cargo loads 108 may be characterized by thermal properties such as thermal mass, thermal sensitivity, or by properties of the cargo such as type of cargo, etc. In the illustrated embodiment, the historical temperature distribution record can provide an ideal or reference temperature distribution wherein the cargo load 108 was known not to be a hot cargo load. In certain embodiments, corrections and adjustments can be made to the historical temperature distribution data to adjust for differences in operating conditions, such as environmental factors, etc.

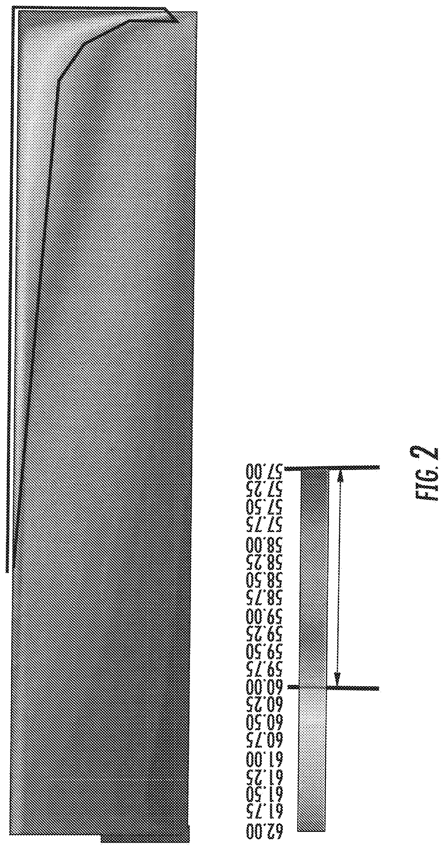

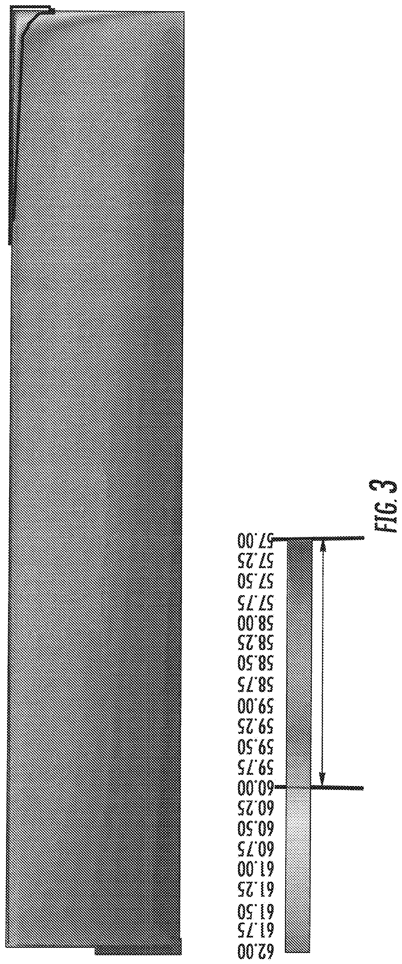

In the illustrated embodiment, the historical temperature distribution profile is compared to the current temperature distribution profile via the processor 110. In the illustrated embodiment, the processor 110 may use any suitable characterization method to compare the temperature distribution profiles. In the illustrated embodiment, the processor 110 can compare the area of acceptable temperature ranges (identified in FIGS. 2 and 3) to the historical acceptable temperature range area. In other embodiments, other methods of comparison may be used, such as comparing sample areas, overlaying the temperature profiles, etc.

For example, FIG. 2 illustrates a temperature distribution profile of a refrigerated container 102 that may have hot cargo loads 108. In the illustrated embodiment, the area that is outlined may be considered outside the acceptable range for a given cargo load and may cause damage or destroy the cargo load 108. In the illustrated embodiment, the processor 110 may compare the temperature profile of FIG. 2 to a known pre-cooled cargo load 108 historical temperature distribution profile shown in FIG. 3. FIG. 3 illustrates a historical temperature distribution profile of a refrigerated container 102 that has a cargo load 108 that has been pre-cooled or that is otherwise optimal. In the illustrated embodiment, the area that is outlined that is considered outside of the acceptable range for the cargo load 108 is much smaller than the temperature distribution profile of FIG. 2 and localized to a location away from the cargo load 108.

In the illustrated embodiment, the processor 110 may compare temperature profiles from the refrigerated container 102 and the historical database 112 to provide a determination of a hot cargo load condition within the refrigerated container 102. If a hot cargo load condition is not indicated, the processor 110 can continue to monitor the refrigerated container 102.

In the illustrated embodiment, in response to the hot cargo load condition indication, the processor 110 can provide an alert to either a remote monitoring interface 120 or to a local monitoring interface 118. In the illustrated embodiment, a remote operator or manager can monitor the condition of the cargo loads 108 and the general status of the refrigerated container 102 via the remote monitoring interface 120. In the illustrated embodiment, the remote monitoring interface 120 can be a dedicated computer, application, website, device, etc. to provide information regarding the refrigerated container 102 and the cargo loads 108. In the illustrated embodiment, the processor 110 can utilize a long range wireless radio 114 to transfer information about the hot load condition to the remote monitoring interface.

In other embodiments, the processor 110 can locally communicate with a local monitoring interface 118 to provide an alarm. In the illustrated embodiment, an operator can make decisions or record incidents for future reference with respect to cargo claims utilizing either the local monitoring interface 118 or the remote monitoring interface 120.

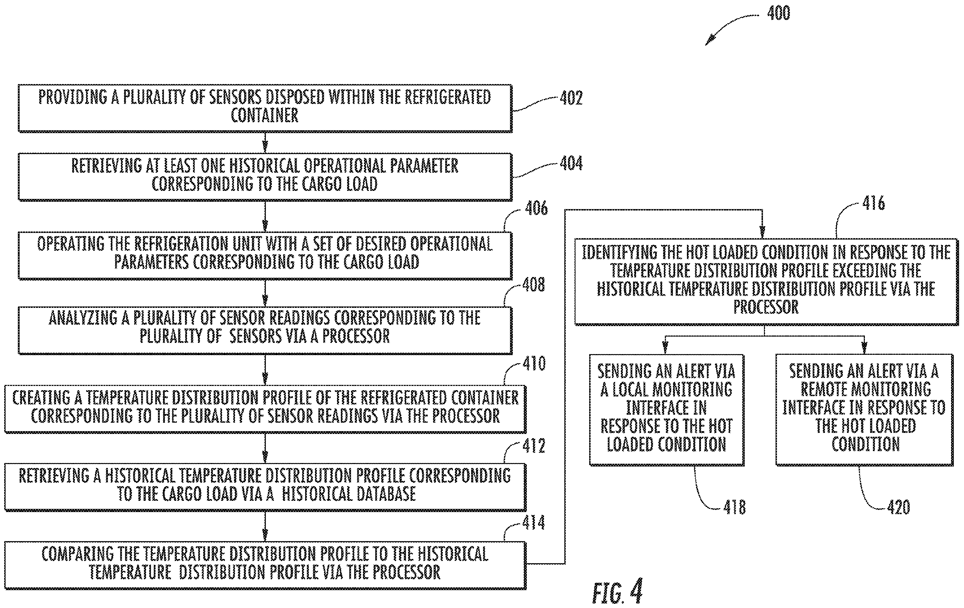

Referring to FIG. 4, a method 400 to monitor for a hot load condition is described. In operation 402, a plurality of sensors disposed within the refrigerated container are provided. In the illustrated embodiment, the sensors can be distributed throughout the volume of the refrigerated container. Further, in certain embodiments, the sensors can be affixed to the cargo load or any other suitable location. In certain embodiments, the sensors can provide air temperature values.

In operation 404, at least one historical operational parameter corresponding to the cargo load is retrieved. In the illustrated embodiment, the records contain information about historical operating parameters utilized for a specific cargo load. In the illustrated embodiment, operating parameters can include refrigeration unit set points, desired temperature range, humidity range, etc. In operation 406, the refrigeration unit is operated with a set of desired operational parameters corresponding to the cargo load.

In operation 408, a plurality of sensor readings corresponding to the plurality of sensors are analyzed via a processor. In the illustrated embodiment, the sensors are disposed throughout the refrigerated container, allowing the processor to utilize interpolation or other approximation techniques to determine a temperature distribution within the refrigerated container. For example, the processor may utilize known locations of the sensors and approximate temperatures between sensor locations.

In operation 410, a temperature distribution profile of the refrigerated container corresponding to the plurality of sensor readings is created via the processor. In certain embodiments, the processor may utilize the sensor values and locations to approximate a two dimensional profile of the temperature distribution within the refrigerated container.

In operation 412, a historical temperature distribution profile corresponding to the cargo load is retrieved from a historical database. In the illustrated embodiment, the historical temperature distribution is a temperature distribution corresponding to a similar cargo load that was transported in a similar refrigerated container under similar conditions.

In operation 414, the temperature distribution profile to the historical temperature distribution profile is compared by the processor. In the illustrated embodiment, the processor may use any suitable characterization method to compare the temperature distribution profiles. In the illustrated embodiment, the processor can compare the area of acceptable temperature ranges to the historical acceptable temperature range area. In other embodiments, other methods of comparison may be used, such as comparing sample areas, overlaying the temperature profiles, etc.

In operation 416, the hot cargo load condition in response to the temperature distribution profile exceeding the historical temperature distribution profile is identified by the processor. In operation 418, an alert via a local monitoring interface is sent in response to the hot cargo load condition. In operation 420, an alert via a remote monitoring interface is sent in response to the hot cargo load condition.

The terminology used herein is for the purpose of describing particular embodiments only and is not intended to be limiting of the embodiments. While the description of the present embodiments has been presented for purposes of illustration and description, it is not intended to be exhaustive or limited to the embodiments in the form disclosed. Many modifications, variations, alterations, substitutions or equivalent arrangement not hereto described will be apparent to those of ordinary skill in the art without departing from the scope of the embodiments. Additionally, while various embodiments have been described, it is to be understood that aspects may include only some of the described embodiments. Accordingly, the embodiments are not to be seen as limited by the foregoing description, but are only limited by the scope of the appended claims.

## Claims

1. A method to determine a hot cargo load condition of a cargo load (108) in a refrigerated container (102), the method comprising:
providing a plurality of sensors (106) disposed within the refrigerated container (102);
operating a refrigeration unit (104) with a set of desired operational parameters corresponding to the cargo load (108);
analyzing a plurality of sensor readings corresponding to the plurality of sensors (106) via a processor (110), and **characterized in that** the method further comprises
creating a temperature distribution profile of the refrigerated container (102) corresponding to the plurality of sensor readings via the processor (110);
retrieving a historical temperature distribution profile corresponding to the cargo load via a historical database (112);
comparing the temperature distribution profile to the historical temperature distribution profile via the processor (110); and
identifying the hot cargo load condition in response to the temperature distribution profile exceeding the historical temperature distribution profile via the processor (110);
wherein the historical temperature distribution profile is a temperature distribution profile corresponding to a similar cargo load (108) which was transported in a similar refrigerated container (102) under similar conditions.

2. The method of claim 1, further comprising retrieving at least one historical operational parameter corresponding to the cargo load (108).

3. The method of any of the preceding claims, wherein at least one sensor of the plurality of sensors (106) is an infrared temperature sensor. 30

4. The method of any of the preceding claims, wherein at least one sensor of the plurality of sensors (106) is a surface temperature sensor.

5. The method of any of the preceding claims, wherein the temperature distribution profile is a three dimensional temperature distribution profile.

6. The method of any of the preceding claims, further comprising sending an alert via a remote monitoring interface (120) in response to the hot cargo load condition.

7. The method of any of the preceding claims, further comprising sending an alert via a local monitoring interface (118) in response to the hot cargo load condition.

8. A system to determine a hot cargo load condition of a cargo load (108) in a refrigerated container (102), comprising:
a plurality of sensors (106) disposed within the refrigerated container (102) to provide a plurality of sensor readings;
a refrigeration unit (104) associated with the refrigerated container (102), the refrigeration unit (104) to operate with a set of desired operational parameters corresponding to the cargo load (108), and **characterized in that** the system further comprises
a historical database (112) including a historical temperature distribution profile corresponding to the cargo load (108); and
a processor to analyze the plurality of sensor readings and create a temperature distribution profile of the refrigerated container (102) corresponding to the plurality of sensor readings, to compare the temperature distribution profile to the historical temperature distribution profile and to identify the hot cargo load condition in response to the temperature distribution profile exceeding the historical temperature distribution profile;
wherein the historical temperature distribution profile is a temperature distribution profile corresponding to a similar cargo load (108) which was transported in a similar refrigerated container (102) under similar conditions.

9. The system of claim 8, wherein the historical database (112) further includes at least one historical operational parameter corresponding to the cargo load (108).

10. The system of any of the preceding claims, wherein at least one sensor of the plurality of sensors (106) is an infrared temperature sensor.

11. The system of any of the preceding claims, wherein at least one sensor of the plurality of sensors (106) is a surface temperature sensor.

12. The system of any of the preceding claims, wherein the temperature distribution profile is a three dimensional temperature distribution profile. 30

13. The system of any of the preceding claims, further comprising a remote monitoring interface (120) to send an alert in response to the hot cargo load condition.

14. The system of any of the preceding claims, further comprising a local monitoring interface (118) to send an alert in response to the hot cargo load condition.

## Patentansprüche

1. Verfahren zum Bestimmen eines heißen Zustands einer Frachtladung (108) in einem gekühlten Container (102), wobei das Verfahren Folgendes umfasst:
Bereitstellen einer Vielzahl von Sensoren (106), die innerhalb des gekühlten Containers (102) angeordnet ist;
Betreiben einer Kühleinheit (104) mit einem Satz von gewünschten Betriebsparametern, welcher der Frachtladung (108) entspricht;
Analysieren einer Vielzahl von Sensormesswerten, die der Vielzahl von Sensoren (106) entspricht, durch einen Prozessor (110) und **dadurch gekennzeichnet, dass** das Verfahren ferner Folgendes umfasst:
Erstellen eines Temperaturverteilungsprofils des gekühlten Containers (102), das der Vielzahl von Sensormesswerten entspricht, durch den Prozessor (110);
Abrufen eines historischen Temperaturverteilungsprofils, das der Frachtladung entspricht, über eine historische Datenbank (112);
Vergleichen des Temperaturverteilungsprofils mit dem historischen Temperaturverteilungsprofil, durch den Prozessor (110); und
Identifizieren des heißen Zustands der Frachtladung als Reaktion auf das Temperaturverteilungsprofil, welches das historische Temperaturverteilungsprofil überschreitet, durch den Prozessor (110);
wobei es sich bei dem historischen Temperaturverteilungsprofil um ein Temperaturverteilungsprofil handelt, das einer ähnlichen Frachtladung (108) entspricht, die in einem ähnlichen gekühlten Container (102) unter ähnlichen Zuständen transportiert wurde.

2. Verfahren nach Anspruch 1, das ferner ein Abrufen mindestens eines historischen Betriebsparameters umfasst, welcher der Frachtladung (108) entspricht.

3. Verfahren nach einem der vorhergehenden Ansprüche, wobei es sich bei mindestens einem Sensor der Vielzahl von Sensoren (106) um einen Infrarot-Temperatursensor handelt.

4. Verfahren nach einem der vorhergehenden Ansprüche, wobei es sich bei mindestens einem Sensor der Vielzahl von Sensoren (106) um einen Oberflächentemperatursensor handelt.

5. Verfahren nach einem der vorhergehenden Ansprüche, wobei es sich bei dem Temperaturverteilungsprofil um ein dreidimensionales Temperaturverteilungsprofil handelt.

6. Verfahren nach einem der vorhergehenden Ansprüche, das ferner ein Senden einer Warnung über eine Fernüberwachungsschnittstelle (120) als Reaktion auf den heißen Zustand der Frachtladung umfasst.

7. Verfahren nach einem der vorhergehenden Ansprüche, das ferner ein Senden einer Warnung über eine lokale Überwachungsschnittstelle (118) als Reaktion auf den heißen Zustand der Frachtladung umfasst.

8. System zum Bestimmen eines heißen Zustands einer einer Frachtladung (108) in einem gekühlten Container (102), das Folgendes umfasst:
eine Vielzahl von Sensoren (106), die innerhalb des gekühlten Containers (102) angeordnet ist, um eine Vielzahl von Sensormesswerten bereitzustellen;
eine Kühleinheit (104), die mit dem gekühlten Container (102) verbunden ist, wobei die Kühleinheit (104) mit einem Satz von gewünschten Betriebsparametern betrieben werden soll, welcher der Frachtladung (108) entspricht, und **dadurch gekennzeichnet,**
**dass** das System ferner Folgendes umfasst:
eine historische Datenbank (112), die ein historisches Temperaturverteilungsprofil beinhaltet, das der Frachtladung (108) entspricht; und
einen Prozessor, um die Vielzahl von Sensormesswerten zu analysieren und ein Temperaturverteilungsprofil des gekühlten Containers (102) zu erstellen, das der Vielzahl von Sensormesswerten entspricht, um das Temperaturverteilungsprofil mit dem historischen Temperaturverteilungsprofil zu vergleichen und den heißen Zustand der Frachtladung als Reaktion auf das Temperaturverteilungsprofil zu identifizieren, welches das historische Temperaturverteilungsprofil überschreitet;
wobei es sich bei dem historischen Temperaturverteilungsprofil um ein Temperaturverteilungsprofil handelt, das einer ähnlichen Frachtladung (108) entspricht, die in einem ähnlichen gekühlten Container (102) unter ähnlichen Zuständen transportiert wurde.

9. System nach Anspruch 8, wobei die historische Datenbank (112) ferner mindestens einen historischen Betriebsparameter beinhaltet, welcher der Frachtladung (108) entspricht.

10. System nach einem der vorhergehenden Ansprüche, wobei es sich bei mindestens einem Sensor der Vielzahl von Sensoren (106) um einen Infrarot-Temperatursensor handelt.

11. System nach einem der vorhergehenden Ansprüche, wobei es sich bei mindestens einem Sensor der Vielzahl von Sensoren (106) um einen Oberflächentemperatursensor handelt.

12. System nach einem der vorhergehenden Ansprüche, wobei es sich bei dem Temperaturverteilungsprofil um ein dreidimensionales Temperaturverteilungsprofil handelt.

13. System nach einem der vorhergehenden Ansprüche, das ferner eine Fernüberwachungsschnittstelle (120) umfasst, um eine Warnung als Reaktion auf den heißen Zustand der Frachtladung zu senden.

14. System nach einem der vorhergehenden Ansprüche, das ferner eine lokale Überwachungsschnittstelle (118) umfasst, um eine Warnung als Reaktion auf den heißen Zustand der Frachtladung zu senden.

## Revendications

1. Procédé permettant de déterminer un état de chargement de fret de fret chaud d'un chargement de fret (108) dans un conteneur frigorifique (102), le procédé comprenant :
la fourniture d'une pluralité de capteurs (106) disposés à l'intérieur du conteneur frigorifique (102) ;
le fonctionnement d'une unité de réfrigération (104) avec un ensemble de paramètres de fonctionnement souhaités correspondant au chargement de fret (108) ;
l'analyse d'une pluralité de lectures de capteurs correspondant à la pluralité de capteurs (106) par l'intermédiaire d'un processeur (110), et **caractérisé en ce que** le procédé comprend en outre
la création d'un profil de répartition de températures du conteneur frigorifique (102) correspondant à la pluralité de lectures de capteurs par l'intermédiaire du processeur (110) ;
la récupération d'un profil historique de répartition de températures correspondant au chargement de fret par l'intermédiaire d'une base de données historique (112) ;
la comparaison du profil de répartition de températures avec le profil historique de répartition de températures par l'intermédiaire du processeur (110) ; et
l'identification de l'état de chargement de fret chaud en réponse au dépassement par le profil de répartition de températures du profil historique de répartition de températures, par l'intermédiaire du processeur (110) ;
dans lequel le profil historique de répartition de températures est un profil de répartition de températures correspondant à un chargement de fret similaire (108) qui a été transporté dans un conteneur frigorifique similaire (102) dans des conditions similaires.

2. Procédé selon la revendication 1, comprenant en outre la récupération d'au moins un paramètre de fonctionnement historique correspondant au chargement de fret (108).

3. Procédé selon l'une quelconque des revendications précédentes, dans lequel au moins un capteur de la pluralité de capteurs (106) est un capteur de température infrarouge.

4. Procédé selon l'une quelconque des revendications précédentes, dans lequel au moins un capteur de la pluralité de capteurs (106) est un capteur de température de surface.

5. Procédé selon l'une quelconque des revendications précédentes, dans lequel le profil de répartition de températures est un profil de répartition de températures tridimensionnel.

6. Procédé selon l'une quelconque des revendications précédentes, comprenant en outre l'envoi d'une alerte par l'intermédiaire d'une interface de surveillance à distance (120) en réponse à l'état de chargement de fret chaud.

7. Procédé selon l'une quelconque des revendications précédentes, comprenant en outre l'envoi d'une alerte par l'intermédiaire d'une interface de surveillance locale (118) en réponse à l'état de chargement de fret chaud.

8. Système permettant de déterminer un état de chargement de fret chaud d'un chargement de fret (108) dans un conteneur frigorifique (102), comprenant :
une pluralité de capteurs (106) disposés à l'intérieur du conteneur frigorifique (102) pour fournir une pluralité de lectures de capteurs ;
une unité de réfrigération (104) associée au conteneur frigorifique (102), l'unité de réfrigération (104) étant destinée à fonctionner avec un ensemble de paramètres de fonctionnement souhaités correspondant au chargement de fret (108), et **caractérisé en ce que** le système comprend en outre une base de données historique (112) comportant un profil historique de répartition de températures correspondant au chargement de fret (108) ; et
un processeur permettant d'analyser la pluralité de lectures de capteurs et de créer un profil de répartition de températures du conteneur frigorifique (102) correspondant à la pluralité de lectures de capteurs, de comparer le profil de répartition de températures avec le profil historique de répartition de températures et d'identifier l'état de chargement de fret chaud en réponse au dépassement par le profil de répartition de températures du profil historique de répartition de températures ;
dans lequel le profil historique de répartition de températures est un profil de répartition de températures correspondant à un chargement de fret similaire (108) qui a été transporté dans un conteneur frigorifique similaire (102) dans des conditions similaires.

9. Système selon la revendication 8, dans lequel la base de données historique (112) comporte en outre au moins un paramètre de fonctionnement historique correspondant au chargement de fret (108) .

10. Système selon l'une quelconque des revendications précédentes, dans lequel au moins un capteur de la pluralité de capteurs (106) est un capteur de température infrarouge.

11. Système selon l'une quelconque des revendications précédentes, dans lequel au moins un capteur de la pluralité de capteurs (106) est un capteur de température de surface.

12. Système selon l'une quelconque des revendications précédentes, dans lequel le profil de répartition de températures est un profil de répartition de températures tridimensionnel.

13. Système selon l'une quelconque des revendications précédentes, comprenant en outre une interface de surveillance à distance (120) permettant d'envoyer une alerte en réponse à l'état de chargement de fret chaud.

14. Système selon l'une quelconque des revendications précédentes, comprenant en outre une interface de surveillance locale (118) permettant d'envoyer une alerte en réponse à l'état de chargement de fret chaud.
